Europäisches Patentamt

European Patent Office

Office européen des brevets

(11) Publication number: **0 317 828**
**A2**

(12) # EUROPEAN PATENT APPLICATION

(21) Application number: 88118677.9

(22) Date of filing: 09.11.88

(51) Int. Cl.⁴: **G06F 13/42**

(30) Priority: 23.11.87 US 123700

(43) Date of publication of application:
31.05.89 Bulletin 89/22

(84) Designated Contracting States:
CH DE ES FR GB IT LI

(71) Applicant: **Siemens Aktiengesellschaft Berlin und München**
**Wittelsbacherplatz 2**
**D-8000 München 2(DE)**

(72) Inventor: **Bier, Gerhard**
**Blumenstrasse 1**
**D-6742 Herxheim(DE)**
Inventor: **Honeck, Karl-Heinz**
**Spanierstrasse 50**
**D-6741 Essingen(DE)**
Inventor: **Neugebauer, Manfred**
**In der Reuth 132**
**D-8520 Erlangen(DE)**

(54) **Serial bus in a computer system for internal system communications.**

(57) A computer system comprising computational means including at least one general data processor and at least one data input/output means having an I/O processor module. Said I/O processor module having an I/O processor module register for storing communications. The computer system comprises further at least one memory array means having at least one memory controller module, at least one memory controller module register for storing information, and a power supply means. A plurality of parameter controllers is connected to the various modules/means, whereby each of said parameter controllers having a parameter controller register for storing information. A serial bus system connecting to each of said plurality of parameter controllers of the computer system and over which status information regarding the status of each respective processor is communicated serially to all other processors of the computer system.

FIG 1

## SERIAL BUS IN A COMPUTER SYSTEM FOR INTERNAL SYSTEM COMMUNICATIONS

Field of the Invention

This invention relates to electronic data processing systems and more particularly to ones using an internal serial bus for internal system communications.

Background of the Invention

It is known that, in a computer system, many items of status information, such as the operating modes of the modules, e.g., active, passive redundant, etc., and the configuration level of the cards, or the processing condition, e.g., cold start, warm start, interrupt, system reset, error message, etc., are supplied separately to each card of the computer system, either through external circuitry or over the bus system that is responsible for overall data processing. This form of system communications becomes difficult when, on the one hand, it is desired to implement central reporting of the information, but on the other hand, the bus system, which is already optimized for normal data processing with respect to speed and quantity of data, is either not assigned such tasks or cannot be used for such data transmission because of a hardware or software defect.

Summary of the Invention

It is an object of this invention to provide internal system communications in the computer system such that information can be exchanged in a simple manner without the use of the bus systems provided for data processing.

Briefly stated, in accordance with one aspect of the invention, the foregoing object is achieved by providing a computer system comprising computational means including at least one general data processor and at least one data input/output means having an I/O processor module. Said I/O processor module having an I/O processor module register for storing communications. The computer system comprises further at least one memory array means having at least one memory controller module, at least one memory controller module register for storing information, and a power supply means. A plurality of parameter controllers is connected to the various modules/means, whereby each of said parameter controllers having a parameter controller register for storing information. A serial bus system connecting to each of said plurality of parameter controllers of the computer system and over which status information regarding the status of each respective processor is communicated serially to all other processors of the computer system.

In accordance with the invention, status information can thus be exchanged in the entire computer system without the use of the data bus and/or the address bus of the system, which is as a rule parallel and is needed for user-oriented data processing tasks. Important items of status information, such as error messages, can therefore be transmitted to the cards even if the system buses are defective, and appropriate secure operating modes with processing stopped in well-defined states on the cards can be ensured.

Brief Description of the Drawing

While the specification concludes with claims particularly pointing out and distinctly claiming the subject matter which is regarded as the invention, it is believed that the invention will be better understood from the following description of the preferred embodiment taken in conjunction with the accompanying drawings in which:

Fig. 1 shows a simplified functional block diagram of an embodiment of a computer system; and

Fig. 2 shows an interconnection pin assignment diagram for the connections between a power supply system and the other cards.

Description of a Preferred Embodiment

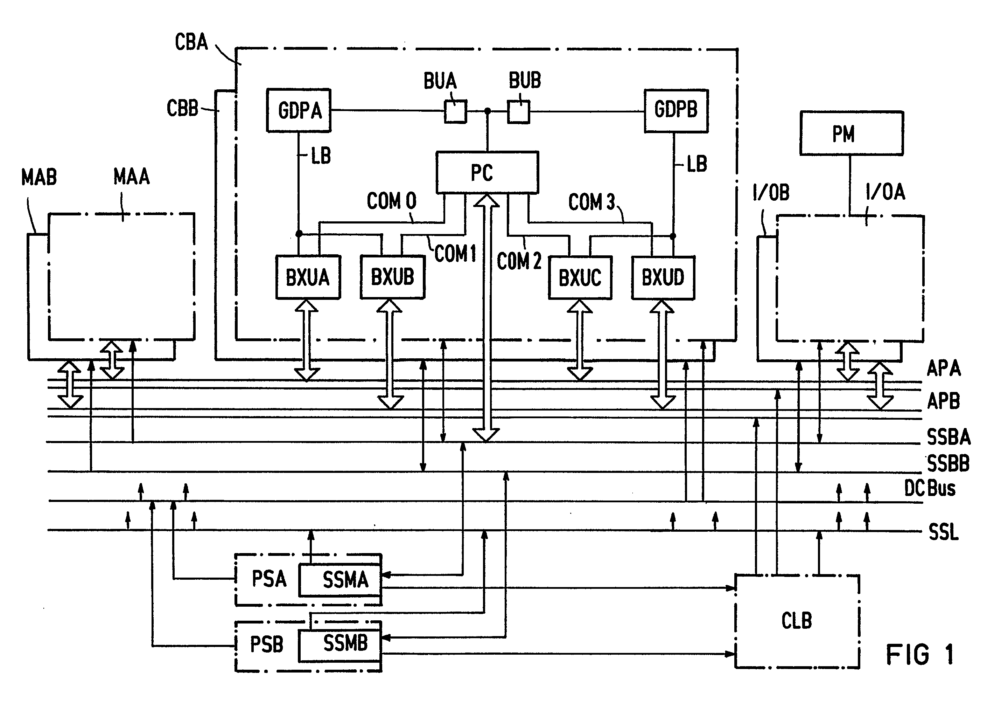

Figure 1 illustrates a computer system with function blocks representing a computer card, i.e., computational board CBA and CBB, on which there are two processor modules, general data processors GDPA and GDPB. Like most of the computer modules mentioned in what follows, the processor modules are VLSI components. The two processor modules GDPA and GDPB form a logical general data processor. One of the modules, under hardware or software control, is assigned the Master function and the other module the subordinate Checker function. In the present preferred circuit, the processor module GDPA is connected, via a local bus LB, to bus extension units BXUA and BXUB, and the processor module GDPB is connected, via a local bus LB, to bus extension units BXUC and BXUD. Each of the bus extension units BXUA and BXUC are connected to a system bus APA and each of the bus extension units BXUB and BXUD are connected to a further system bus APB. In a nonredundant bus version (not shown) only one AP bus is connected via a BXU module to the processors.

In a further function block, not shown in more detail, memory arrays MAA and MAB are connected to the system buses APA and APB.

The bus extension units BXUA and BXUB are, furthermore, each connected via a communications line COM0 and COM1 to a parameter controller PC, and the bus extension units BXUC and BXUD are each connected via a communications line COM2 and COM3 to the said parameter controller PC. The parameter controller may be, for example, the Intel 8051 microprocessor. At further inputs of the parameter controller PC, certain parameters of the computer card can be set from outside by means of analog or digital setting means as well as by means of stored data. The parameter controller is connected, via a buffer BUA, to the local bus LB of the first pair of processor modules GDPA and GDPB which are predefined as a Master pair and, via a buffer BUB, to the local bus LBB of the second processor modules GDPB.

Also in Figure 1, on the right-hand side, there are function blocks representing the input-output module I/OA and I/OB of the computer system described here, the circuitry not being treated in detail at this point. This I/O modules accomplishes the connection of the computer system to peripherals PM by means of well-defined communications protocols, e.g., LAN, etc.

Figure 1 further shows two serial system support buses SSBA and SSBB and a set of support signal lines SSL. The parameter controllers PC of the computer cards are connected to either SSBA or SSBB: Redundant embodiments of each of the computer cards (e. g., processor means, memory means, input/output means) and the power supply modules are connected to separate serial system support buses.

The bottom part of Figure 1 shows an overall plan of two power supply modules PSA and PSB, both of essentially the same design. In addition to the DC power supply connections, the power supply modules PSA and PSB exhibit two system support modules SSMA and SSMB, each of which is provided with a microprocessor, e.g., an Intel 8051. Outputs of the system support modules SSMA and SSMB are connected to the system support buses SSBA and SSBB respectively.

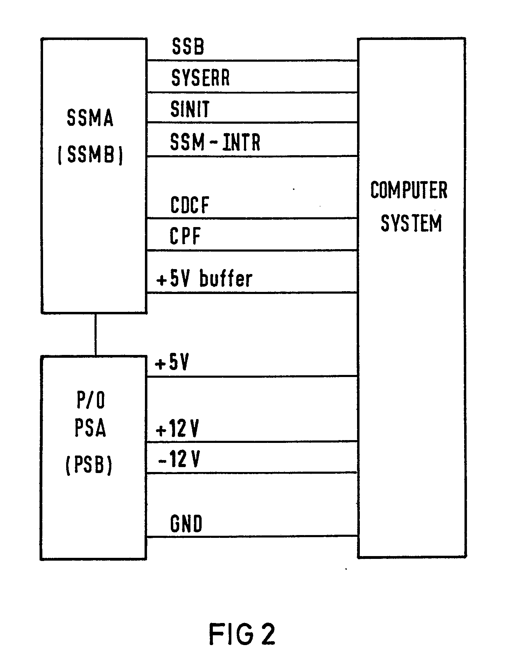

The pin assignments of one of the power supply modules PS described in Figure 1 are illustrated in Figure 2. The top part shows the system support connections between the computer system CS and the respective system support modules SSMA and SSMB, some of which have already been mentioned in connection with Figure 1. Here is the serial interconnecting line to the system support buses SSMA and SSMB, which are responsible for all monitoring functions and certain control functions relating to the functioning of the power supply modules PSA and PSB respectively. In order to keep the number of interconnecting lines small, signal exchange on this line is serial; this is possible because the signals being transmitted here are not, as a rule, time-critical, e.g., the DC or AC on/off signal.

In the present preferred embodiment, the serial line interconnection SSB is duplicated, so that nonstop operation is possible if one line fails. Modification of this general approach may use only one common serial bus SSBA connected to all computer boards or may use only a subset of processor, I/O, power supply and memory functions.

The interconnecting line SYSER between the power supply module PS and the computer system serves to signal an error in a system component, for example by means of a LOW signal, and leads to a corresponding display on the control panel on the power supply module PS.

The entire system can be initialized over the interconnecting line SINIT, for example with a LOW signal. A further function of this signal is to determine the time at which the basic initialization phase is to end. This is the time when the SINIT signal is HIGH and each system card must end basic initialization, for example 512 system clock pulses lasting preferably a total of 16 microseconds after the rising edge of the SINIT signal. The signal on this interconnecting line SINIT is initiated if, for example, the line power is turned on, the "watchdog timer" indicates an overrun of allotted time, or the RESET button is pressed.

The interconnecting line SSM-INTR allows a system interrupt signal to be emitted; this action can be induced, for example, by pressing an appropriate button on the system control panel of the power supply module PS. This signal causes the processor modules to start the system monitor program, for example for test functions, without resetting.

The interconnecting line CDCF can transmit a LOW signal, which indicates that the DC output of the power supply module PS has failed. A DC failure may lead, for example after, preferably, 50 microseconds, to a system failure.

Over the interconnecting line CPF, the system is notified of an interruption of the AC at the input of the power supply module PS. For example, a LOW signal can be used to indicate that the system will fail after preferably 2 milliseconds.

In the bottom part of the power supply module PS, shown in Figure 2, the DC connections between the power supply module and the computer system are illustrated. Here the following outputs are made available to the computer system: +5V, + -12V, and ground GND.

An important function during a cold or warm start of the entire computer system in an altered configuration is initialization. Here all VLSI components and the other physical and logical system components must be identified and then parameters must be loaded into them.

After the system is switched on, i.e., a cold start, or just a portion of the system is restarted, i.e., a warm start, initialization of all components under software or hardware control is carried out first during an INIT signal issued by the system support modules SSM or received over the system bus. An identification phase follows, during which the identities of the VLSI components are established. Next, in the parameter loading phase, parameters are loaded into the appropriate registers of the VLSI components, preferably by means of the parameter controller PC; the parameters depend on the configuration of the system and on several controllable factors and may differ from the values imposed in the first phase of initialization. Both phases are executed principally over the COM pins of the VLSI components, through serial loading of the registers in the components.

The physical identification mechanism, with appropriate commands, is controlled by a microcode implemented in the processor modules.

It will now be understood that there has been disclosed a new computer system having a serial bus for internal communication. As will be evident from the foregoing description, certain aspects of the invention are not limited to the particular details of the examples illustrated, and it is therefore contemplated that other modifications or applications will occur to those skilled in the art. It is accordingly intended that the claims shall cover all such modifications and applications as do not depart from the true spirit and script of the invention.

## Claims

1. A computer system comprising:
computational means including at least one general data processor;
at least one data input/output means having an I/O processor module;
said I/O processor module having an I/O processor module register for storing communications;
at least one memory array means having at least one memory controller module;
at least one memory controller module register for storing information;
a plurality of parameter controllers, each of said parameter controllers having a parameter controller register for storing information;
each respective parameter controller being connected by means of other modules for the communication of status information between said module registers; and
a serial bus system connecting to each of said plurality of parameter controllers of the computer system and over which status information regarding the status of each respective mean is communicated serially to all other means of the computer system.

2. A computer system in accordance with claim 1 further comprising:
connection means connecting said serial bus system to at least one power supply module.

3. A computer system in accordance with claim 1 or 2 further comprising:
redundant serial bus system connected to one set of said plurity of parameter controllers of the computer system.

87 P 7439

FIG 1

87 P 7439

FIG 2